# EUROPÄISCHE PATENTANMELDUNG

(11) **EP 3 461 724 A1**
(43) Veröffentlichungstag der Anmeldung: **03.04.2019**
(21) Anmeldenummer: 18157192.8
(22) Anmeldetag: 16.02.2018
(51) Int. Cl.: B62D 55/24

(54) **RAUPENBAND FÜR EIN LAUFWERK EINES ARBEITSFAHRZEUGES**

(30) Priorität: 29.09.2017 DE 102017122659
(71) Anmelder: CLAAS Industrietechnik GmbH, 33106 Paderborn (DE)
(72) Erfinder: Obermeier-Hartmann, Robert, 33142 Büren (DE); Verhorst, Jan-Willem, 59555 Lippstadt (DE)
(74) Vertreter: CLAAS Gruppe

(57) **Zusammenfassung**

Ein Raupenband (10) für ein Laufwerk (12) eines insbesondere landwirtschaftlichen Arbeitsfahrzeuges weist eine innere Mantelfläche (14) mit einer Mehrzahl an Führungsblöcken (16) auf, wobei die Führungsblöcke (16) in einer Laufrichtung (18) unter Ausbildung von Zwischenräumen (20) beabstandet zueinander angeordnet sind, und wobei jeder Führungsblock (16) zwei sich in Laufrichtung (18) erstreckende und einander gegenüberliegende Seitenflächen (22) und jeweils eine die Seitenflächen (22) verbindende erste Fläche (24) und zweite Fläche (26) aufweist, wobei die erste Fläche (24) zur Laufrichtung unter einem ersten Winkel (α) und die zweite Fläche (26) zur Laufrichtung (18) unter einem zweiten Winkel (β) geneigt ist. Gemäß der Erfindung ist die erste Fläche (24) und/oder die zweite Fläche (26) mindestens eines Führungsblockes (16), jeweils zumindest teilweise, unter einem von 90 Grad verschiedenen Winkel (α, β) zur Laufrichtung (18) ausgebildet und angeordnet.

## Beschreibung

Die Erfindung betrifft ein Raupenband für ein Laufwerk eines, insbesondere landwirtschaftlichen, Arbeitsfahrzeuges.

Arbeitsfahrzeuge, die beispielsweise als Baumaschinen verwendet werden und insbesondere für Erdbewegungen sowie zum Transport hoher Lasten dienen, sind zumeist als Fahrzeug mit Laufwerken in Form von Gleisketten ausgebildet. Neben dieser Art von Laufwerken sind auch solche bekannt, bei denen an Stelle der mit Laufflächengliedern versehenen Ketten aus einem Gummi-Metall-Verbundwerkstoff bestehende Raupenbänder verwendet werden. In beiden Fällen sind zwischen den beiden an einem Tragrahmen geführten Umlenkrädern Tragrollen angeordnet, die unter anderem für eine gleichmäßigere Lastverteilung und eine bessere Anpassung an unterschiedliche Bodenkonturen sorgen sollen.

Da durch den Einsatz von mit Raupenbänden versehener Laufwerke die Geländegängigkeit und das Traktionsverhalten des jeweiligen Arbeitsfahrzeuges verbessert werden kann, wobei auf Grund der größeren Aufstandsfläche auch der Bodendruck verringert wird, finden diese Laufwerke auch vermehrt Anwendung an landwirtschaftlichen Arbeitsfahrzeugen, wie z. B. Erntemaschinen, insbesondere selbstfahrende Mähdrescher oder Feldhäcksler, Ackerschleppern und Systemfahrzeugen. Dabei können sowohl Vollraupen- als auch Halbraupenanordnungen vorgesehen sein. Bei einer Halbraupenanordnung ist dabei üblicherweise eine der Antriebsachsen an Stelle der Antriebsräder mit Raupenlaufwerken versehen, wobei statt einer Kette ein profiliertes Raupenband verwendet werden kann. An Erntemaschinen kamen entsprechende Laufwerke in der Vergangenheit üblicherweise dann zur Anwendung, wenn eine als selbstfahrender Mähdrescher ausgebildete Erntemaschine für die Reisernte verwendet wurde. Klimatische Bedingungen, die während der Erntezeit zu erheblicher Bodenfeuchtigkeit führen, sind aber ein wesentlicher Grund dafür, dass diese Laufwerke auch an Mähdreschern verwendet werden, die bei der Getreide- oder Rapsernte zum Einsatz kommen, damit trotz des feuchten und eventuell tiefgründigen Bodens die Ernte möglichst bodenschonend durchgeführt werden kann.

Die DE 10 2012 109 085 A1 offenbart ein Laufwerk für ein Arbeitsfahrzeug mit einem Umlenkrad und einem Antriebsrad, die an einem Tragrahmen geführt sind und an ihrem Umfang ein endloses Zugmittel in Form eines Raupenbandes aufnehmen. Aus der SU 1 751 035 A1 ist ein Laufwerk für ein Fahrzeug bekannt, das ein Umlenkrad und ein Antriebsrad aufweist, die an einem Tragrahmen geführt sind und an ihrem Umfang ein endloses, ebenfalls als Raupenband ausgebildetes Zugmittel aufnehmen. Beim Betrieb des Fahrzeuges kann es zu teilweise erheblichen Verschmutzungen des Raupenbandes, beispielsweise durch Erde, Lehm oder auch Steine, kommen, welche sich negativ auf den Betrieb des Fahrzeuges auswirken können, besonders wenn es zu einer Anhäufung von Verunreinigungen kommt. Um diese Verunreinigungen zu vermeiden, ist an dem Tragrahmen eine Vorrichtung zum Abstreifen von Erde und anderen Verunreinigungen von einer mit Führungsblöcken versehenen inneren Mantelfläche des Raupenbandes vorgesehen, die ein zur inneren Mantelfläche des Raupenbandes geführtes Abstreifelement aufweist. Das Abstreifelement ist dabei federnd in Richtung der Führungsblöcke vorgespannt, so dass in diesem Bereich permanent Reibung zwischen dem Abstreifelement und diesem Bereich des Zugmittels auftritt, die zu einer Beschädigung des Zugmittels führen kann. Allerdings können sich auch Erde und andere Verunreinigungen an dem Abstreifelement oder zwischen den Führungsblöcken festsetzen, wodurch zum einen die Funktion des Reinigens beeinträchtigt wird und zum anderen Schäden am Raupenband hervorgerufen werden können.

Aufgabe der Erfindung ist es daher, ein Festsetzen von Verunreinigungen an einer mit Führungsblöcken versehenen inneren Mantelfläche eines Raupenbandes eines Laufwerks zu vermeiden.

Diese Aufgabe wird durch den unabhängigen Anspruch gelöst. Vorteilhafte Weiterbildungen sind Gegenstand der Unteransprüche.

Das erfindungsgemäße Raupenband für ein Laufwerk eines, insbesondere landwirtschaftlichen, Arbeitsfahrzeuges weist eine innere Mantelfläche mit einer Mehrzahl an Führungsblöcken auf, wobei die Führungsblöcke in einer Laufrichtung unter Ausbildung von Zwischenräumen beabstandet zueinander angeordnet sind, und wobei jeder Führungsblock zwei sich in Laufrichtung erstreckende und einander gegenüberliegende Seitenflächen und jeweils eine die Seitenflächen verbindende erste Fläche und zweite Fläche aufweist, wobei die erste Fläche zur Laufrichtung unter einem ersten Winkel und die zweite Fläche zur Laufrichtung unter einem zweiten Winkel geneigt ist. Gemäß der Erfindung ist die erste Fläche und/oder die zweite Fläche mindestens eines Führungsblockes, jeweils zumindest teilweise, unter einem von 90 Grad verschiedenen Winkel zur Laufrichtung ausgebildet und angeordnet.

Die an der inneren Mantelfläche vorhandenen Führungsblöcke wirken dabei mit einem Umlenkrad, einem Antriebsrad und an Stützrollen des Laufwerkes angeordneten Führungsnuten zusammen, um das Raupenband insbesondere seitlich zu führen und dessen Ablaufen von dem Umlenkrad und dem Antriebsrad beim Umlauf des Raupenbandes zu verhindern. Alternativ kann das Raupenband als Gleiskette oder anderweitig segmentiert ausgebildet sein. Die erste und zweite Fläche zweier benachbarter, also in Laufrichtung unmittelbar nebeneinander angeordneter, Führungsblöcke begrenzen dabei jeweils in Laufrichtung einen Zwischenraum. Bei einer Verformung des Raupenbandes durch dessen Bewegung können sich auch Führungsblöcke relativ zueinander bewegen, wodurch es zu einer Lockerung von Verunreinigungen in den Zwischenräumen kommen kann. Dadurch, dass die erste und/oder zweite Fläche eines Führungsblockes ganz oder zumindest teilweise zur Laufrichtung geneigt sind, kann es zu einer seitlichen Krafteinwirkung von der ersten und/oder zweiten Fläche auf Verunreinigungen in den Zwischenräumen kommen, so dass die Verunreinigungen besser aus den Zwischenräumen entfernt werden können und ein Festsetzen besonders in den Zwischenräumen verhindert werden kann. Die erfindungsgemäße Ausgestaltung der Führungsblöcke ermöglicht eine im Wesentlichen abstreiferfreie Selbstreinigung des Raupenbandes, insbesondere im Bereich der Zwischenräume. Hierdurch kann ein Festsetzen von Verunreinigungen vermieden und so die Funktion des Raupenbandes länger erhalten werden.

Gemäß einer vorteilhaften Ausgestaltung ist das Raupenband als elastisches Gummiraupenband, insbesondere mit elastischen Führungsblöcken, ausgebildet. Durch die verbesserte Beweglichkeit des elastischen Gummiraupenbandes, insbesondere auch der Führungsblöcke relativ zueinander, kann eine verbesserte Reinigungswirkung der Zwischenräume durch die Führungsblöcke erreicht werden.

In einer weiteren vorteilhaften Ausgestaltung sind der erste Winkel und der zweite Winkel derart ausgebildet, dass die erste und zweite Fläche in dieselbe Richtung geneigt sind. Hierdurch können die Führungsblöcke jeweils im Wesentlichen in Form eines Parallelogramms ausgebildet sein. Dies hat den Vorteil, dass Verunreinigungen im Wesentlichen zu beiden Seiten aus dem Raupenband gefördert werden können. Vorteilhafterweise sind der erste Winkel und der zweite Winkel derart ausgebildet, dass die erste und zweite Fläche in entgegengesetzte Richtungen geneigt sind. Hierbei können beispielsweise der erste und zweite Winkel unterschiedliche Vorzeichen und einen im Wesentlichen gleichen Wert aufweisen. Hierdurch können die Führungsblöcke jeweils im Wesentlichen trapezförmig ausgebildet sein. Dies ermöglicht einen Austrag von Verunreinigungen im Wesentlichen zu einer bevorzugten Seite des Raupenbandes.

Eine weitere vorteilhafte Ausgestaltung sieht vor, dass die erste und/oder zweite Fläche mindestens eines Führungsblocks zu jeder Seitenfläche hin unter einem eigenen ersten Teilwinkel geneigt ist. Hierbei kann die erste und/oder zweite Fläche beispielsweise zu jeder Seite der Laufrichtung angewinkelt sein, wodurch die jeweilige Fläche einen Knick aufweisen kann und beispielsweise keilförmig ausgebildet sein kann. Die jeweiligen Teilwinkel können einen gleichen oder unterschiedlichen Wert, insbesondere bei gleichem oder unterschiedlichem Vorzeichen, aufweisen. Dies bietet den Vorteil, dass Verunreinigungen zuverlässig beispielsweise zu beiden Seiten aus den Zwischenräumen gefördert werden können.

In vorteilhafter Weise ist zwischen den angewinkelten Bereichen jeweils der ersten und/oder zweiten Fläche ein im Wesentlichen rechtwinklig zur Laufrichtung angeordneter Abschnitt ausgebildet. Dieser Abschnitt ist im Wesentlichen quer zur Laufrichtung in Form einer Abflachung ausgebildet. Hierdurch kann der Verschleiß im Bereich des Überganges zwischen den jeweiligen Teilwinkeln verringert werden, da eine zu spitze Ausgestaltung der jeweiligen Fläche vermieden werden kann.

Es ist des Weiteren von Vorteil, wenn zumindest zwei in Laufrichtung benachbart zueinander angeordnete Führungsblöcke jeweils einen ersten und zweiten Winkel mit demselben oder einem unterschiedlichen Vorzeichen, und insbesondere einem gleichen Wert, aufweisen. Dies ermöglicht eine Ausgestaltung des jeweiligen Zwischenraumes im Wesentlichen in Form eines Parallelogramms. Bei ungleichen Vorzeichen der Winkel, und insbesondere mit gleichem Wert, kann der jeweilige Zwischenraum im Wesentlichen konisch ausgebildet werden, wodurch Verunreinigungen besonders zu einer Seite hin aus den Zwischenräumen entfernt werden können.

Weiterhin betrifft die Erfindung ein Laufwerk, insbesondere für ein landwirtschaftliches Arbeitsfahrzeug, mit mindestens einem wie vorstehend ausgebildeten und ausgestalteten Raupenband.

Die Erfindung ist nicht auf die angegebene Kombination der Merkmale des unabhängigen Anspruchs und der abhängigen Ansprüche beschränkt. Es ergeben sich darüber hinaus weitere Möglichkeiten, einzelne Merkmale, insbesondere dann, wenn sie sich aus den Ansprüchen, der nachfolgenden Beschreibung des Ausführungsbeispiels oder unmittelbar aus den Figuren ergeben, miteinander zu kombinieren. Außerdem soll die Bezugnahme der Ansprüche auf die Figuren durch die Verwendung von Bezugszeichen den Schutzumfang der Ansprüche auf keinen Fall auf das dargestellte Ausführungsbeispiel beschränken.

Im Folgenden wird die Erfindung unter Bezugnahme auf die anliegenden Figuren beispielhaft erläutert, wobei die nachfolgend dargestellten Merkmale sowohl jeweils für sich genommen als auch in unterschiedlicher Kombination miteinander einen Aspekt der Erfindung darstellen können.

Es zeigen:
- Fig. 1: als Draufsicht eine schematische Darstellung einer aus dem Stand der Technik bekannten Ausführung eines erfindungsgemäßen Raupenbandes für ein Laufwerk;
- Fig. 2: als Draufsicht eine schematische Darstellung eines Raupenbandes mit parallelogrammförmig ausgebildeten Führungsblöcken;
- Fig. 3: eine schematische Darstellung eines Raupenbandes mit trapezförmig ausgebildeten Führungsblöcken; und
- Fig. 4: eine schematische Darstellung eines Raupenbandes mit zumindest teilweise geneigten Flächen.

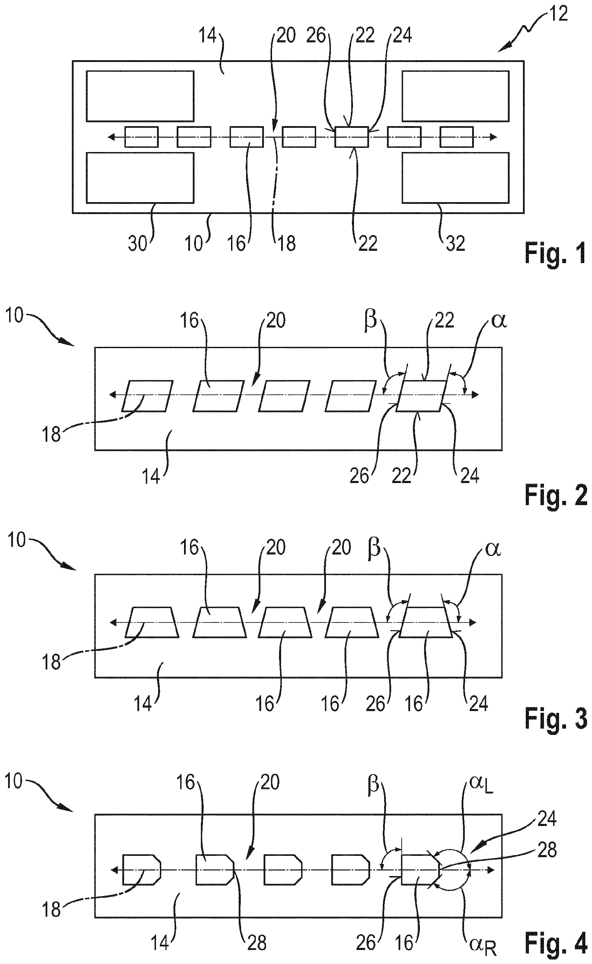

Figur 1 zeigt eine schematische Darstellung eines aus dem Stand der Technik bekannten Laufwerks 12 für ein nicht weitergehender dargestelltes, insbesondere landwirtschaftliches, Arbeitsfahrzeug. Das Laufwerk 12 umfasst mindestens ein Umlenkrad 32 und ein Antriebsrad 30, die an einem nicht gezeigten Tragrahmen geführt sind und an ihrem Umfang ein endloses, als elastisches Raupenband 10 ausgebildetes Zugmittel aufnehmen. Das Laufwerk 12 kann auch drei oder mehr Rollen aufweisen und in Form eines sogenannten Dreieckslaufwerks ausgebildet sein. Das Raupenband 10 ist an seiner vom überfahrenen Boden abgewandten inneren Mantelfläche 14 über nicht gezeigte Tragrollen abgestützt. An der inneren Mantelfläche 14 sind elastische Führungsblöcke 16 angeordnet, welche mit dem Antriebsrad 30 und dem Umlenkrad 32 zusammenwirken und eine seitliche Führung des Raupenbandes 10 sicherstellen. Die Führungsblöcke 16 sind im Wesentlichen mittig und in Laufrichtung 18 beabstandet zueinander auf der Mantelfläche 14 angeordnet.

Die Führungsblöcke 16 weisen jeweils zwei einander gegenüberliegende Seitenflächen 22 auf, welche im Wesentlichen mit dem Antriebs- und Umlenkrad 30, 32 zur Führung des Raupenbandes 10 zusammenwirken. Die Seitenflächen 22 eines Führungsblockes 16 sind jeweils durch eine erste Fläche 24 und eine zweite Fläche 26 verbunden, wobei die erste und zweite Fläche 24, 26 an einem Führungsblock 16 ebenfalls einander gegenüberliegend angeordnet sind. Die in Figur 1 dargestellten ersten und zweiten Flächen 24, 26 sind im Wesentlichen rechtwinkelig zur Laufrichtung 18 des Raupenbandes 10 angeordnet. Hierdurch weist ein zwischen zwei benachbart angeordneten Führungsblöcken 16 ausgebildeter Zwischenraum 20 eine rechteckige oder quadratische Form auf.

Die Figur 2 zeigt eine schematische Darstellung eines erfindungsgemäßen Raupenbandes 10 für ein wie in Figur 1 dargestelltes Laufwerk 12. Das Raupenband 10 weist ebenfalls in Laufrichtung 18 beabstandet zueinander angeordnete Führungsblöcke 16 auf, deren Seitenflächen 22 sich ebenfalls in Laufrichtung 18 erstrecken, damit eine zuverlässige Führung des Raupenbandes 10 gewährleistet werden kann. Die ersten und zweiten Flächen 24, 26 der dargestellten Führungsblöcke 16 sind jedoch gegenüber der Laufrichtung 18 nicht rechtwinkelig, sondern geneigt angeordnet. Die erste Fläche 24 ist dabei um einen ersten Winkel α und die zweite Fläche um einen zweiten Winkel β gegenüber der Laufrichtung 18 geneigt. Die erste und zweite Fläche 24, 26 sind dabei derart geneigt, dass der Führungsblock 16 im Wesentlichen in Form eines Parallelogramms ausgebildet ist. Zwischen benachbarten Führungsblöcken 16 wird dabei ein Zwischenraum 20 beispielsweise durch die diesen begrenzende zweite Fläche 26 eines ersten Führungsblocks 16 und die erste Fläche 24 eines zweiten Führungsblocks 16 ausgebildet. Der Zwischenraum 20 ist dabei in Form eines gegenüber der Laufrichtung 18 geneigten Spaltes ausgebildet. Die Zwischenräume 20 sind dabei jeweils gleichförmig ausgebildet und zu derselben Seite geneigt angeordnet.

Eine alternative Ausgestaltung des erfindungsgemäßen Raupenbandes 10 ist in Figur 3 dargestellt. Hierbei sind die erste und zweite Fläche 24, 26 eines Führungsblockes 16 an einer Seite jeweils zueinander geneigt angeordnet. Bei den dargestellten Führungsblöcken 16 weisen der erste und zweite Winkel α, β im Wesentlichen einen gleichen Wert jedoch mit unterschiedlichen Vorzeichen auf. Hierdurch weist der Führungsblock 16 eine im Wesentlichen trapezförmige Form auf. Durch die Anordnung mehrerer so ausgebildeter Führungsblöcke 16 hintereinander, werden die zwischen diesen liegenden Zwischenräume 20 ebenfalls im Wesentlichen trapezförmig ausgebildet. Die trapezförmigen Zwischenräume 20 können jeweils gleichartig angeordnet sein, so dass Verunreinigungen im Wesentlichen jeweils zu derselben Seite aus den Zwischenräumen 20 transportiert wird. Denkbar ist auch eine abwechselnde Ausgestaltung und Anordnung der Führungsblöcke 16 bzw. Zwischenräume 20, so dass sich die trapezförmigen Zwischenräume 20 beispielsweise jeweils abwechselnd zu beiden Seiten öffnen.

Die erste und zweite Fläche 24, 26 eines Führungsblockes 16 (Fig. 4) können auch jeweils nur teilweise in eine oder unterschiedliche Richtungen gegenüber der Laufrichtung 18 geneigt sein. Hierbei kann eine Fläche 24, 26 und der zugehörige erste oder zweite Winkel α, β jeweils einen entsprechenden Teilwinkel α_{L}, α_{R}, β_{L}, β_{R} aufweisen. Die in Figur 4 dargestellten Führungsblöcke 16 weisen jeweils eine erste Fläche 24 auf, welche in Laufrichtung 18 keilförmig ausgebildet ist. Dabei ist die erste Fläche 24 jeweils mit Teilwinkeln α_{L}, α_{R} zu beiden Seiten gegenüber der Laufrichtung 18 geneigt. Zwischen den geneigten Teilflächen ist dabei ein abgeflachter Abschnitt 28 ausgebildet, der im Wesentlichen rechtwinkelig zur Laufrichtung 18 ausgestaltet ist und die geneigten Teilflächen verbindet. Die Teilwinkel α_{L}, α_{R} weisen einen gleichgroßen Wert auf, sind aber in entgegengesetzte Richtungen von der Laufrichtung 18 ausgebildet. Die zweite Fläche 26 der Führungsblöcke 16 ist dabei nicht gegenüber der Laufrichtung 18 geneigt.

### Bezugszeichenliste

10 Raupenband
12 Laufwerk
14 innere Mantelfläche
16 Führungsblock
18 Laufrichtung
20 Zwischenraum
22 Seitenfläche
24 erste Fläche
26 zweite Fläche
28 Abschnitt
30 Antriebsrad
32 Umlenkrad

α erster Winkel
α_{L} erster Teilwinkel
α_{R} erster Teilwinkel
β zweiter Winkel

## Patentansprüche

1. Raupenband (10) für ein Laufwerk (12) eines insbesondere landwirtschaftlichen Arbeitsfahrzeuges mit einer inneren Mantelfläche (14) mit einer Mehrzahl an Führungsblöcken (16), wobei die Führungsblöcke (16) in einer Laufrichtung (18) unter Ausbildung von Zwischenräumen (20) beabstandet zueinander angeordnet sind, und wobei jeder Führungsblock (16) zwei sich in Laufrichtung (18) erstreckende und einander gegenüberliegende Seitenflächen (22) und jeweils eine die Seitenflächen (22) verbindende erste Fläche (24) und zweite Fläche (26) aufweist, wobei die erste Fläche (24) zur Laufrichtung unter einem ersten Winkel (α) und die zweite Fläche (26) zur Laufrichtung (18) unter einem zweiten Winkel (β) geneigt ist, **dadurch gekennzeichnet, dass**
die erste Fläche (24) und/oder die zweite Fläche (26) mindestens eines Führungsblockes (16), jeweils zumindest teilweise, unter einem von 90 Grad verschiedenen Winkel (α, β) zur Laufrichtung (18) ausgebildet und angeordnet ist.

2. Raupenband nach Anspruch 1, **dadurch gekennzeichnet, dass** das Raupenband (10) als elastisches Gummiraupenband, insbesondere mit elastischen Führungsblöcken (16), ausgebildet ist.

3. Raupenband nach Anspruch 1 oder 2, **dadurch gekennzeichnet, dass** der erste Winkel (α) und der zweite Winkel (β) derart ausgebildet sind, dass die erste und zweite Fläche (24, 26) in dieselbe Richtung geneigt sind.

4. Raupenband nach einem der vorherigen Ansprüche, **dadurch gekennzeichnet, dass** der erste Winkel (α) und der zweite Winkel (β) derart ausgebildet sind, dass die erste und zweite Fläche (24, 26) in entgegengesetzte Richtungen geneigt sind.

5. Raupenband nach einem der vorherigen Ansprüche, **dadurch gekennzeichnet, dass** die erste und/oder zweite Fläche (24, 26) mindestens eines Führungsblocks (16) zu jeder Seitenfläche (22) hin unter einem eigenen ersten Teilwinkel (α_{L}, α_{R}, β_{L}, β_{R}) geneigt ist.

6. Raupenband nach einem der vorherigen Ansprüche, **dadurch gekennzeichnet, dass** zwischen den angewinkelten Bereichen jeweils der ersten und/oder zweiten Fläche (24, 26) ein im Wesentlichen rechtwinklig zur Laufrichtung angeordneter Abschnitt (28) ausgebildet ist.

7. Raupenband nach einem der vorherigen Ansprüche, **dadurch gekennzeichnet, dass** zumindest zwei in Laufrichtung (18) benachbart zueinander angeordnete Führungsblöcke (16) jeweils einen ersten und zweiten Winkel (α, β) mit demselben oder einem unterschiedlichen Vorzeichen, und insbesondere einem gleichen oder unterschiedlichen Wert, aufweisen.

8. Laufwerk, insbesondere für ein landwirtschaftliches Arbeitsfahrzeug, mit mindestens einem Raupenband (10) gemäß einem der Ansprüche 1 bis 7.
